Europäisches Patentamt

(19) European Patent Office

Office européen des brevets

(11) Publication number: **0 336 301**
**B1**

(12) EUROPEAN PATENT SPECIFICATION

(45) Date of publication of the patent specification:
**07.11.90**

(21) Application number: **89105648.3**

(22) Date of filing: **30.03.89**

(51) Int. Cl.⁵: **H04Q 11/04, H04Q 3/68**

(54) One-sided switching network.

(30) Priority: **08.04.88 PL 271712**

(43) Date of publication of application:
**11.10.89 Bulletin 89/41**

(45) Publication of the grant of the patent:
**07.11.90 Bulletin 90/45**

(84) Designated Contracting States:
**DE FR GB IT NL SE**

(56) References cited:
**PROCEEDINGS 1987, INTERNATIONAL CONFERENCE ON COMMUNICATIONS TECHNOLOGY, 1987, pages 982-985 Nanjing, CN; A. JAJSZCZYK: "On triangular digital switching networks"**
**IEEE TRANSACTIONS ON COMMUNICATIONS, vol. COM-35, no. 12, December 1987, pages 1383-1384, IEEE, New York, NY, US; A. JAJSZCZYK: "One-sided switching networks composed of digital switsching matrices"**
**PROCEEDIMGS OF THE IEEE, vol. 65, no. 9, September 1977, pages 1263-1271, New York, US; M.J. MARCUS: "The theory of connecting networks and their complexity: A review"**

(73) Proprietor: **POLITECHNIKA POZNANSKA, pl. M. Sklodowskiej-Curie 5, 60-965 Poznan(PL)**

(72) Inventor: **Jajszczyk, Andrzej, ul. Bulgarska 76/1, PL-60-321 Poznan(PL)**
Inventor: **Kabacinski, Wojciech, Os. Bohaterów II Wojny Swiatowej 35/69, PL-61-386 Poznan(PL)**

(74) Representative: **Ebbinghaus, Dieter et al, Patentanwälte v. Füner, Ebbinghaus, Finck Mariahilfplatz 2 & 3, D-8000 München 90(DE)**

## Description

This invention relates to digital switching systems. In particular it relates to a one-sided multistage switching network composed of triangular switches, which is especially useful for the construction of a telecommunication system and for telephone exchanges.

The structures of integrated switches which mix in the same chip or in the same printed board both time and space switching are well known. One-sided matrices lead to so-called triangular switches. These switches can be used for constructing a switching network whose capacity is greater than the capacity of a single switch. Structures of one-sided switching networks composed of triangular switches have been presented in several papers. In publications such as J. Cornu and M. Meinck "ITT 1240 Digital Exchange: Advanced Component Technology", Electrical Communication, 1981, 56, pages 161 to 172, and W. Frank, M. C. Rahier, D. Sallaerts and D. C. Upp "System 12: Dual Switch Port", Electrical Communication, 1985, 59, pages 54 to 59, the structures of triangular switches are described. Such switches were used for constructing a switching network as described in a publication of J. M. Cotton, K. Giesken, A. Lawrence and D. C. Upp "ITT 1240 Digital Exchange: Digital Switching Network", Electrical Communication, 1981, 56, pages 148 to 160. In this switching network the triangular switches are grouped into four stages. Some of the terminals of each switch in one stage are connected with the terminals of the switches in the next stage, while remaining terminals of these switches are connected with the terminals of the switches in the previous stage. The terminals of the switching network are formed by some terminals of the switches in the first stage of the switching network. In the described switching network there are no connections between switches in the same stage. In another solution as described in a publication of A. Jajszczyk "On Triangular Digital Switching Networks", Proc. 1987 Int. Conf. on Communication Technology, Nanjing, P.R.China, 1987, pages 982 to 985, switches in some stages or in all stages are replaced with one-stage full access switching blocks. These blocks are composed of triangular switches. In the switching network constructed in such a way, some of the switches in the same stage are connected to each other.

A purpose of the invention is the construction of such one-sided multistage switching networks, which can be constructed of fewer number of triangular switches than those switching networks which were previously known.

According to the invention, at least the first stage of the switching network contains an even number of one-sided switching modules which are grouped into pairs, and the terminals of each switching module in all stages of the network are separated into incoming and outgoing PCM links. The incoming PCM links of the first module of the pairs are used for connecting external signals which are sent to the network, while the outgoing PCM links are used for connections with the switching modules of the next stage. The incoming PCM links of the second module of the pairs are used for connections with the switching modules of the next stage, while the outgoing PCM links are used for sending signals from the network. The incoming PCM links of the switching modules of the next stage are sequentially connected to those modules of the input stage, outgoing PCM links of which are used for connections to the modules of the next stage, while the outgoing PCM links of these modules are sequentially connected to those modules of the input stage, incoming PCM links of which are used for connections from the modules of the next stage. The incoming PCM links of the first switching module of the pairs and the outgoing PCM links of the second switching module of the pairs are grouped respectively, and they serve as terminals of the switching network.

The switching modules in each stage can be either triangular switches, or a set of n triangular switches, where n is an integer, or one-stage switching networks, or multi-stage switching networks.

Such a structure makes it possible to construct a one-sided multistage switching network which is composed of standard switching elements and comprises fewer number of switches than switching networks previously known.

Embodiments of the invention will now be described with reference to the accompanying drawings wherein:

Fig. 1 shows a block diagram of a rearrangeable two-stage switching network, in which switching blocks of the first stage are composed of two switching modules,

Fig. 2 shows a block diagram of a nonblocking two-stage switching network, in which switching blocks of the first stage are composed of four switching modules,

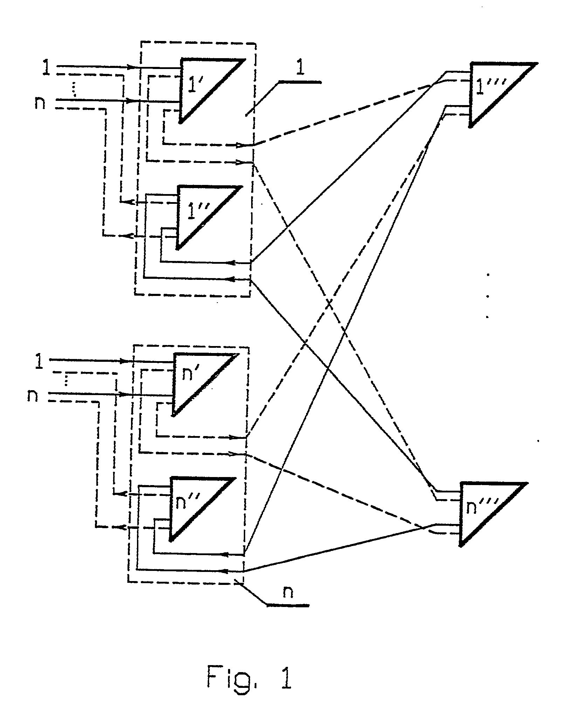

The switching network having the capacity of n x n PCM links, shown in Fig. 1, comprises n switching blocks, 1 to n, in the first stage, which are composed of a pair of one-sided switching modules (1′, 1″ to n′, n″). One of these two modules, 1′ to n′, is used for the connections to the second stage of the network, while another module of the pair, 1″ to n″, is used for the connections from the second stage, which comprises n one-sided switching modules, 1‴ to n‴. The terminals of each module 1′, 1″, 1‴ to n′, n″, n‴, in both stages, are separated into incoming and outgoing PCM links. The incoming PCM links of the modules 1′ to n′ in each of the switching blocks 1 to n are used for connecting external signals which are sent to the network, while the outgoing PCM links of these modules are used for the connections to the switching modules 1‴ to n‴ of the next stage. The incoming PCM links of the remaining modules 1″ to n″ of the blocks are used for the connections from the modules 1‴ to n‴ of the next stage, while the outgoing PCM links of each of these modules are used for sending signals from the network. The incoming PCM links of the modules 1‴ to n‴ of the second stage are sequentially connected with the modules 1′ to n′ of the first stage while the outgoing PCM links of these modules are sequentially connected with the remaining modules 1″ to n″ of the first stage. In each of the switching blocks 1 to n, the incoming PCM links which send external signals to the network and the outgoing PCM links which send signals from the network are grouped into pairs, and they constitute the terminals of the switching network.

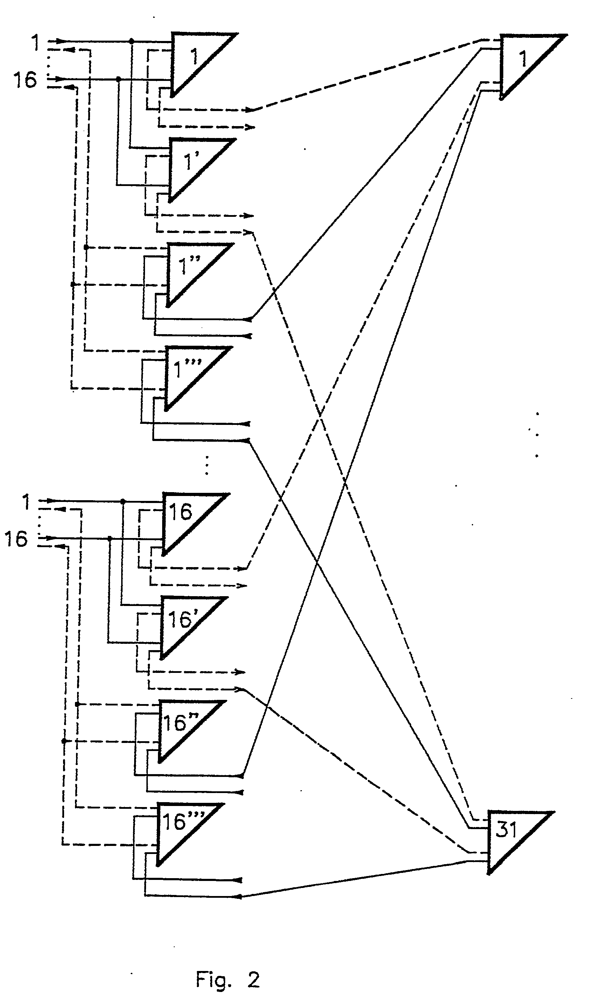

In case of switching network having the capacity of 256 PCM links the total number of switches is equal to 48, while the switching network of the same capacity, constructed in the way which was previously known comprises 64 such switches. The switching network of Fig. 2 has the capacity of 256 PCM links and is composed of triangular switches of capacity of 16 PCM links each. This switching network comprises 95 switches. There are 64 of these switches in the first stage, and they are grouped into 16 blocks, and the remaining 31 switches in the second stage. The optimal previously known switching network comprises 175 such switches.

## Claims

1. A one-sided multistage network composed of one-sided switching blocks which are grouped into stages, characterized in that at least the first stage of the switching network contains an even number of one-sided switching modules (1′, 1″ to n′, n″), which are grouped into switching blocks (1 to n) containing a pair of switching modules each, and the terminals of each switching module (1′, 1″, 1‴ to n′, n″, n‴) in all stages, are separated into incoming and outgoing PCM links; and the incoming PCM links of the first modules (1′ to h′) in each of the switching blocks (1 to n) are used for connecting external signals which are sent to the network, while the outgoing PCM links of these first modules are used for connections to the switching modules (1‴ to n‴) of the next stage; and, the incoming PCM links of the second modules (1″ to n″) of the blocks (1 to n) are used for connections from the modules (1‴ to n‴) of the next stage, while the outgoing PCM links of each of these first-stage modules are used for sending signals from the network; and the incoming PCM links of the switching modules (1‴ to n‴) of the next stage are sequentially connected with the first modules (1′ to n′) of the first stage, while the outgoing PCM links of the modules (1‴ to n‴) of the next stage are sequentially connected with the remaining second modules (1″ to n″) of the second; and the incoming PCM links of each of the switching blocks (1 to n), which are used for connecting external signals, and the outgoing PCM links of these blocks, which are used for sending signals from the network, are grouped respectively into pairs, and they serve as the terminals of the switching network.

2. A one-sided switching network according to claim 1, wherein the switching modules (1′, 1″, 1‴ to n′, n″, n‴) in some or all stages are triangular switches.

3. A one-sided switching network according to claim 1, wherein the switching modules (1′, 1″, 1‴ to n′, n″, n‴) in some or all stages are composed of "n" triangular switches, where "n" is an integer.

4. A one-sided switching network according to claim 1, wherein the switching modules (1′, 1″, 1‴ to n′, n″, n‴) in some or all stages are one-sided single-stage switching networks.

5. A one-sided switching network according to claim 1, wherein the switching modules (1′, 1″, 1‴ to n′, n″, n‴) in some or all stages are one-sided multistage switching networks.

## Patentansprüche

1. Einseitiges mehrstufiges Netzwerk aus einseitigen, in Stufen gruppierten Schaltblöcken, dadurch gekennzeichnet, daß wenigstens die erste Stufe des Schaltnetzwerks eine gerade Anzahl einseitiger Schaltmodule (1′, 1″ bis n′, n″) enthält, die in je zwei Schaltmodule aufweisende Schaltblöcke (1 bis n) gruppiert sind und die Anschlüsse jedes Schaltmoduls (1′, 1″, 1‴ bis n′, n″, n‴) in allen Stufen in eingehende und ausgehende PCM-Verbindungen getrennt sind, daß die eingehenden PCM-Verbindungen der ersten Module (1′ bis n′) in jedem Schaltblock (1 bis n) zur Verbindung externer Signale verwendet werden, die dem Netzwerk zugeführt werden, während die ausgehenden PCM-Verbindungen dieser ersten Module für Verbindungen mit den Schaltmodulen (1‴ bis n‴) der nächsten Stufe verwendet werden, daß die eingehenden PCM-Verbindungen der zweiten Modulen (1″ bis n″) der Blöcke (1 bis n) für Verbindungen von den Modulen (1‴ bis n‴) der nächsten Stufe verwendet werden, während die ausgehenden PCM-Verbindungen jedes zweiten Moduls zum Senden von Signalen von dem Netzwerk verwendet werden, daß die eingehenden PCM-Verbindungen der Schaltmodulen (1‴ bis n‴) der nächsten Stufe sequentiell mit den ersten Modulen (1′ bis n′) der ersten Stufe verbunden sind, während die ausgehenden PCM-Verbindungen der Modulen (1‴ bis n‴) der nächsten Stufe sequentiell mit den verbleibenden zweiten Modulen (1″ bis n″) der ersten Stufe verbunden sind, und daß die eingehenden PCM-Verbindungen jedes Schaltblocks (1 bis n), die zur Verbindung externer Signale verwendet werden und die ausgehenden PCM-Verbindungen dieser Blöcke, die zum Senden von Signalen vom Netzwerk verwendet werden, jeweils zu Paaren gruppiert sind und als Anschlüsse des Schaltnetzwerks dienen.

2. Einseitiges Schaltnetzwerk nach Anspruch 1, wobei die Schaltmodulen (1′, 1″, 1‴ bis n`, n″, n‴) in einigen oder allen Stufen Dreieckschalter sind.

3. Einseitiges Schaltnetzwerk nach Anspruch 1, wobei die Schaltmodulen (1′, 1″, 1‴ bis n′, n″, n‴) in einigen oder allen Stufen aus "n"-Dreieckschaltern aufgebaut sind, wobei "n" eine gerade Zahl ist.

4. Einseitiges Schaltnetzwerk nach Anspruch 1, wobei die Schaltmodulen (1′, 1″, 1‴ bis n′, n″, n‴) in einigen oder allen Stufen einseitige einstufige Schaltnetzwerke sind.

5. Einseitiges Schaltnetzwerk nach Anspruch 1, wobei die Schaltmodulen (1′, 1″, 1‴ bis n′, n″, n‴) in einigen oder allen Stufen einseitige mehrstufige Schaltnetzwerke sind.

**Revendications**

1. Réseau à rebroussement à plusieurs étages, composé de blocs de commutation à rebroussement qui sont groupés en étages, caractérisé en ce qu'au moins le premier étage du réseau de commutation contient un nombre paire de modules de commutation à rebroussement (1', 1'' à n', n''), qui sont groupés en blocs de commutation (1 à n) contenant chacun une paire de modules de commutation, et les bornes de chaque module de commutation (1', 1'', 1'' à n', n'', n''') de tous les étages sont separées en liaisons MIC entrantes et sortantes; les liaisons MIC entrantes des premiers modules (1' à n') dans chacun des blocs de commutation (1 à n) sont utilisées pour l'application de signaux externes qui sont envoyés au reseau, tandis que les liaisons MIC sortantes de ces premiers modules sont utilisées pour des connexions vers les modules de commutation (1'' à n''') de l'étage suivant; les liaisons MIC entrantes des seconds modules (1'' à n'') des blocs (1 à n) sont utilisées pour des connexions venant des modules (1'' à n''') de l'étage suivant, tandis que les liaisons MIC sortantes de chacun de ces seconds modules sont utilisées pour envoyer des signaux a partir du réseau; les liaisons MIC entrantes des modules de commutation (1'' à n''') de l'étage suivant sont connectées sequentiellement aux premiers modules (1' à n') du premier étage, tandis que les liaisons MIC sortantes des modules de l'étage suivant (1'' à n''') sont connectées séquentiellement aux seconds modules restants (1'' à n'') du premier étage; et les liaisons MIC entrantes de chacun des blocs de commutation (1 à n) utilisées pour l'application de signaux externes et les liaisons MIC sortantes de ces blocs utilisées pour envoyer des signaux à partir du réseau, sont groupées respectivement en paires et ces liaisons servent de bornes du réseau de commutation.

2. Réseau de commutation a rebroussement selon la revendication 1, dans lequel les modules de commutation (1', 1'', 1'' à n', n'', n''') dans quelques-uns ou dans tous les étages sont des commutateurs triangulaires.

3. Réseau de commutation à rebroussement selon la revendication 1, dans lequel les modules de commutation (1', 1'', 1'' à n', n'', n''') dans quelques-uns ou dans tous les etages sont composes de "n" commutateurs triangulaires, ou "n" est un nombre entier.

4. Réseau de commutation à rebroussement selon la revendication 1, dans lequel les modules de commutation (1', 1'', 1'' à n', n'', n''') dans quelques-uns ou dans tous les etages sont des réseaux de commutation à rebroussement à un etage.

5. Réseau de commutation à rebroussement selon la revendication 1, dans lequel les modules de commutation (1', 1'', 1'' à n', n'', n''') dans quelques-uns ou dans tous les étages sont des réseaux de commutation à rebroussement à plusieurs étages.

Fig. 1

EP 0 336 301 B1

Fig. 2